# EUROPEAN PATENT SPECIFICATION

(11) **EP 3 326 366 B1**
(45) Date of publication and mention of the grant of the patent: **24.04.2019**
(21) Application number: 15759757.6
(22) Date of filing: 03.09.2015
(51) Int. Cl.: G06T 7/73, H04N 13/305, H04N 13/327

(54) **MEASURING ROTATIONAL POSITION OF LENTICULAR LENS SHEET**
MESSUNG DER ROTATIONSPOSITION EINER LINSENRASTERPLATTE
MESURAGE DE POSITION ANGULAIRE DE FEUILLE DE VERRE LENTICULAIRE

(43) Date of publication of application: 30.05.2018
(73) Proprietor: Ultra-D Coöperatief U.A., 5657 HJ Eindhoven (NL)
(72) Inventor: MARSMAN, Herman Geert, NL-5632 ML Eindhoven (NL); ZUIDEMA, Hans, NL-5629 ME Eindhoven (NL); RIEMENS, Abraham Karel, NL-5521 SV Eersel (NL); CREMERS, Michael, NL-5721 DA Asten (NL); WOUTERS, Johannes Hubertina Petrus, NL-6013 RK Hunsel (NL)
(74) Representative: DeltaPatents B.V.
(86) International application number: PCT/EP2015/070138
(87) International publication number: WO 2017/036531

(56) References cited:
- US-A- 5 479 270
- US-A1- 2014 009 579
- US-B1- 6 177 217

## Description

### FIELD OF THE INVENTION

The invention relates to a system and method for measuring a rotational position of a lenticular lens sheet. Such lenticular lens sheets are known per se and normally comprise a plurality of lenticular lenses arranged on or as a sheet. Various uses of such lenticular lens sheets exists. For example, in lenticular printing, a lenticular image may be created from two or more images, and combined with a lenticular lens sheet to create various frames of animation, or different views of a scene. Lenticular lens sheets are also increasingly used in the field of consumer electronics.

### BACKGROUND ART

It may be desirable to measure a rotational position of a lenticular lens sheet as the use of the lenticular lens sheet may necessitate the lenticular lens sheet having to have a predetermined relative orientation with respect to another entity, such as a printed lenticular image.

US2010265578 describes the use of an image sheet which is provided with a composite image which can be viewed stereoscopically or changeably when bonded to a lenticular sheet having a plurality of cylindrical lenses arranged in parallel. The composite image including a plurality of image units arranged side by side, each corresponding to each of the cylindrical lenses and having a plurality of strip-like images. The image sheet includes an image area to be provided with the composite image; and a pattern area to be provided with at least one first adjustment pattern and at least one second adjustment pattern. This is said to enable the rotational direction and a pitch direction of the lenticular sheet to be determined with respect to the image sheet. It is noted that is also known to display a pattern, similar to that of US2010265578, electronically on a display.

Alternatively, it is known to affix markers to a lenticular lens sheet and to measure its rotational position by detecting the markers in a camera image of the lenticular lens sheet.

Disadvantageously, it is cumbersome to use specially prepared images, whether electronically displayed or not. Markers have also been found cumbersome to use.

US 6 177 217 B1 describes a method and apparatus for precise positioning of arrays with periodic structures. With reference to Coarse Rotational Alignment', a coarse alignment source is described which emits a beam of light which passes through a lenticular array towards a coarse alignment lens. The coarse alignment source is imaged by the coarse alignment lens as a light line, the light line having a direction that is precisely perpendicular to the lenticular array direction. A coarse-rotation detector is positioned in the image plane of the lens some distance away from the optical axis of the lens and is coincident with the light line. While rotating the lenticular array, the detector detects the maximum signal when the lenticular array is parallel to the fast-scan axis. Detection and rotation stage motion control act cooperatively to achieve coarse rotational alignment of the lenticular array.

US 5 479 270 A describes a method and apparatus which provides alignment lines adjacent to a lenticular print. The alignment lines are projected through a lenticular overlay or faceplate and used to align the overlay to the print. The alignment apparatus uses a camera and a computer to detect changes in brightness along the alignment lines or changes in a Moire pattern to effect rotational alignment. US 2014/009579 A1 describes an alignment method applied to a barrier-type 3D display.

### INTRODUCTION OF THE INVENTION

It is an object of the invention to obtain an improved system and method for measuring a rotational position of a lenticular lens sheet.

The following aspects of the invention are at least in part based on the insight that, when a lenticular lens sheet is illuminated with a light source, a light pattern appears, with the light pattern having one or more properties that are indicative of the rotational position of the lenticular sheet.

A first aspect of the invention provides a system, as defined in claim 1, for measuring a rotational position of a lenticular lens sheet comprising an array of elongated lenticular lenses. A further aspect of the invention provides a method, as defined as in claim 7, for measuring a rotational position of a lenticular lens sheet comprising an array of elongated lenticular lenses.

Embodiments are defined in the dependent claims.

The above measures involve purposefully illuminating a lenticular lens sheet with a light source. The light reflected and/or transmitted by the lenticular lens sheet is then captured by a camera, resulting in the image showing a light pattern. The resulting image is then analyzed by a processor to determine the rotational position of the lenticular lens sheet relative to a coordinate system associated with the image. For example, the coordinate system may be the image's coordinate system, e.g., expressed by row (y) and column (x) numbers, or a coordinate system which is defined with respect to an object shown in the image and thereby associated with the image.

The inventors have further recognized that the light pattern may be produced both by the reflection as well as the transmission of light emitted by the light source. Accordingly, the light source may be arranged at a first one of the two sides of the lenticular lens sheet, e.g., the front side or the back side, while the camera may be arranged at a second one of the two sides of the lenticular lens sheet, with the first one and the second one being either the same, meaning that the light pattern is caused by reflection, or different, meaning that the light pattern is caused by transmission.

It is therefore not needed to use specially prepared images, whether electronically displayed or not, nor markers. Rather, it suffices to capture and analyze the light pattern appearing in the image of the lenticular lens sheet after reflection or transmission of light from a light source.

The processor may be configured for:
- analyzing the image to identify a line-shaped structure in the light pattern;
- determining the rotational position of the lenticular lens sheet from one or more properties of the line-shaped structure.

The inventors have recognized that the light pattern typically comprises a line-shaped structure which has one or more properties which allow the rotational position of the lenticular lens sheet to be determined. A non-limiting example of such properties are geometric properties, relating to, e.g., a position and/or orientation of the line-shaped structure within the image. Having identified the line-shaped structure in the image, such properties may be determined.

In accordance with the independent claims, the light source is a first light source and the line-shaped structure is a first line-shaped structure, the system further comprises:
- a second light source for emitting light onto at least part of the surface of the lenticular lens sheet;
and the processor is configured for:
- analyzing the image to identify a second line-shaped structure in the light pattern;
- determining the rotational position of the lenticular lens sheet based on a comparison of properties of the first line-shaped structure and the second line-shaped structure.

It has been found that using two light sources may give more precise results. For example, the second light source may be arranged at the first one of the two sides of the lenticular lens sheet, e.g., the same side as the first light source, or at the opposite side of the lenticular lens sheet.

In accordance with the independent claims, the comparison is of respective positions of the first line-shaped structure and the second line-shaped structure in the image. The distance between both line-shaped structures may be a measure for the rotational position of the lenticular lens sheet.

Optionally, the processor is configured for:
- determining an orientation of the line-shaped structure in the image;
- determining the rotational position of the lenticular lens sheet based on said orientation of the line-shaped structure.

The orientation of the line-shaped structure in the image has been found to be indicative of the rotational position of the lenticular lens sheet. For example, the line-shaped structure may appear perpendicular to, or under another known angle with, the longitudinal lens direction of the elongated lenticular lenses of the lenticular lens sheet. Said angle may be known from simulation or calibration and it is dependent on the relative positions of the lens sheet, the light source and the camera.

Optionally, the light source and the camera are co-axially positioned at a distance along an axis substantially perpendicular to the surface of the lenticular lens sheet. Such co-axially positioning of the light source and the camera may ensure that the line-shaped structure, in the following also simply referred to as reflection line' (even in the case of the transmission of light), is straight rather than curved, independent from the rotational position of the lenticular lens module. It is noted that the term 'substantially perpendicular' may refer to perpendicular, i.e., at 90 degrees, or a range around perpendicular, e.g., +/- 1 degree, +/- 2 degrees, +/- 5 degrees or +/- 10 degrees. Optionally, the camera is oriented with its optical axis substantially perpendicular to the lenticular lens sheet.

Optionally, the light source is positioned in front of the camera partially but not completely blocking a field of view of the camera. Such positioning enables the co-axially positioning at a same side of the lenticular lens sheet, or in general allows the camera and the light source to be proximately positioned and thereby the curvature of the reflection line to be limited. It is noted that, alternatively, the light source may be positioned behind the camera, in that the camera may partially but not completely block the light emitted from the light source onto the lenticular lens sheet. For example, the camera may be coaxially positioned at a distance from the light source at which the camera partially blocks the light emitted by the light source such that a direct reflection of the light is avoided or reduced. Here, the term 'direct reflection' refers to the reflection of light emitted by the light source on any flat surface lying in the field of view of the camera,

Optionally, the light source and the camera are positioned in a virtual plane that is oriented substantially perpendicular to a longitudinal direction of the elongated lenticular lenses. It is noted that there exists a reference plane that is oriented perpendicular to a longitudinal direction of the elongated lenticular lenses. The orientation of the reference plane may be coarsely known, e.g., from calibration or previous measurements. The light source and the camera may thus be brought into a position in which they are presumed to be located in the reference plane, thereby increasing the straightness of the reflection line in the captured image. However, in reality, the light source and the camera may be positioned in a virtual plane which deviates from the reference plane. A reason for this is that the precise positioning of the light source and the camera in the reference plane requires the rotational position of the lenticular lens sheet to be already precisely known. Nevertheless, the light source and the camera may be positioned such that they are approximately in the reference plane. In other words, the light source and the camera may be positioned in a plane which is presumed to be perpendicular to the longitudinal direction of the elongated lenticular lenses, with said presumption being based on the rotational position of the lenticular lens sheet being coarsely known, e.g., from calibration or measurement. It is noted that in case of two light sources, both may be positioned in the virtual plane that is oriented substantially perpendicular to a longitudinal direction of the elongated lenticular lenses.

Optionally, the first light source and the second light source emit light having different optical properties which are distinguishable in the image data obtained from the camera. This may facilitate distinguishing the reflection lines of the respective light sources in the captured image.

Optionally, the first light source and the second light source emit light having a different color. For example, the colors may be selected such that they are optimally separable by way of the different color filters, or other color separation means, of the camera's sensor.

Optionally, the first light source and the second light source are positioned at opposite sides of the camera.

Optionally, the camera comprises a sensor comprised of rows of sensor elements, and the camera is oriented such that the rows of sensor elements are substantially parallel to the virtual plane. It has been found that when the reflection line(s) substantially coincide with the sensor rows, this facilitates the determination of the relative position of the reflection lines in the captured image.

Optionally, the light source is or approximates a point source. Using a point source, or an approximation thereof, as light source(s) may yield sharper edges of the reflection line(s).

Optionally, the processor is configured for applying an artifact reduction filter to the image prior to analyzing the light pattern. Such artifact reduction may reduce image artefacts caused by the optics of the photo camera or image sensor. Preferably, an edge-preserving noise reduction is used. An example of an artifact reduction technique is noise reduction. However, the processor may also apply any other known artifact reduction technique, or a combination thereof.

Optionally, the method is used in the manufacture of a product or device comprising the lenticular lens sheet.

It will be appreciated by those skilled in the art that two or more of the above-mentioned embodiments, implementations, and/or aspects of the invention may be combined in any way deemed useful.

Modifications and variations of the system and/or the computer program product, which correspond to the described modifications and variations of the method, can be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 shows a system for measuring a rotational position of a lenticular lens sheet;
Fig. 2 shows a camera recording light reflected by the lenticular lens sheet;
Fig. 3 shows the camera recording light transmitted through the lenticular lens sheet;
Fig. 4 illustrates a light pattern in the form of a line-shaped structure;
Fig. 5 shows a photo of a light pattern as captured by the camera;
Fig. 6 shows a light source positioned in front of the camera partially but not completely blocking a field of view of the camera;
Fig. 7 shows two light sources positioned at opposite sides of the camera;
Fig. 8 shows two light sources positioned in physical space along a virtual plane, and the camera being oriented such that rows of sensor elements are substantially parallel to the virtual plane;
Fig. 9 illustrates a light pattern from two light sources, with the light pattern comprising two line-shaped structures which are mutually displaced;
Fig. 10 shows a cut-out view of Fig. 9, illustrating a distance measure;
Fig. 11 shows a close-up photo of a light pattern as captured by the camera; and
Fig. 12 shows a method for measuring a rotational position of a lenticular lens sheet.

It should be noted that items which have the same reference numbers in different Figures, have the same structural features and the same functions, or are the same signals. Where the function and/or structure of such an item has been explained, there is no necessity for repeated explanation thereof in the detailed description.

### List of reference numerals

The following list of reference numbers is provided for facilitating the interpretation of the drawings and shall not be construed as limiting the claims.
020 lenticular lens sheet
022 plurality of lenticular lenses
040 light reflected by lenticular lens sheet
042 light transmitted through lenticular lens sheet
060 light pattern as captured by camera
062 first line-shaped structure
064 second line-shaped structure
066 distance between line-shaped structures
068 horizontal line-shaped structure
069 direct reflection of flash
080 virtual plane through camera and first and second light sources
100 system for measuring rotational position of lenticular lens sheet
120 first light source
130 second light source
140 camera
142 image data
144 field of view of camera
146 sensor
148 sensor rows
160 processor
200 method for measuring rotational position of lenticular lens sheet
210 emitting light
220 capturing image
230 analysing image

### DESCRIPTION OF THE INVENTION

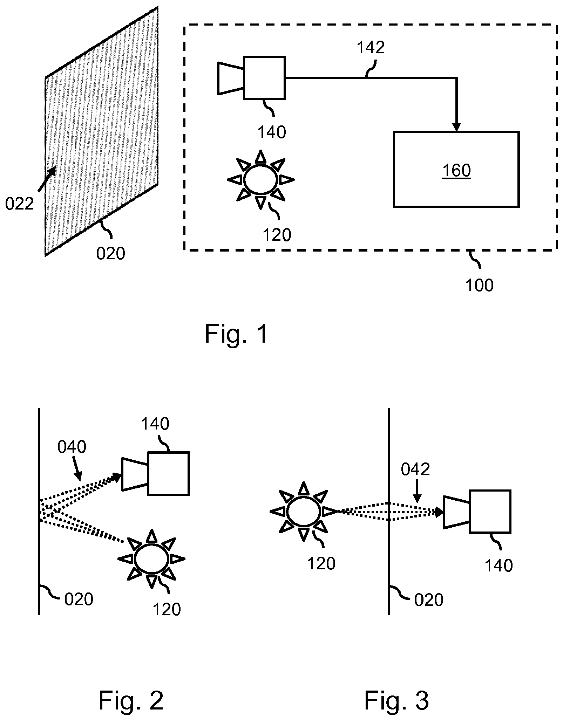

Fig. 1 shows a system 100 for measuring a rotational position of a lenticular lens sheet. The lenticular lens sheet 020 is shown as a rectangular sheet comprising a plurality of elongated lenticular lenses 022, which in Fig. 1 are shown to be slanted by way of slanted lines, with the lines representing the longitudinal lens direction of the lenticular lenses. Such and other types of lenticular lens sheets are known per se. The system 100 comprises a light source 120, a camera 140 and a processor 160. The light source 120 is shown to be positioned such that it emits light onto at least part of a surface of the lenticular lens sheet 020. Moreover, the camera 140 is shown to be positioned such that it is able to capture an image of the light reflected by (part of) the lenticular lens sheet 020.

During operation of the system 100, the light source 120 may emit light onto the surface of the lenticular lens sheet 020. The camera 140 may then capture an image showing the light reflected by the surface, thereby obtaining an image showing a light pattern. The image may be provided by the camera 140 to the processor 160 in the form of image data 142. The processor 160 may then determine the rotational position of the lenticular lens sheet 020 relative to a coordinate system associated with the image based on an analysis of the light pattern in the image.

It will be appreciated that the coordinate system associated with the image may have a known relation with physical world, which may depend on, e.g., the relative positions of the camera, the light source and the lenticular lens sheet. This relation may have been determined previously, e.g., by simulation or calibration. By having determined the rotational position of the lenticular lens sheet in the coordinate system associated with the image, as well as its relation to the physical world, the rotational position of the lenticular lens sheet in the physical world may be determined. It is noted, however, that it is not needed to relate said rotational position to a rotational position in the physical world, e.g., when used in a feedback system as also described in the present specification, or in other applications.

The above principle is also shown in Fig. 2 by means of a side view of the lenticular lens sheet 020. Here, the light source 120 is shown to be positioned aside the camera 140, e.g., above, below and/or sideways thereof. The camera 140 is further shown to capture light reflected by the lenticular lens sheet 020, namely schematically by way of the dashed arrows 040. In the example of Figs. 1 and 2, the captured light is obtained by reflections from at least the lenticular lens sheet 020 (and possibly also from the surface(s) of a carrier of the lenticular lens sheet), with the light source 120 and camera 140 both being positioned at a same side of the lenticular lens sheet. Alternatively, as also shown in Fig. 3, the light source 120 and the camera 140 may be positioned at opposite sides of the lenticular lens array 020, and the camera 140 may capture light transmitted through the lenticular lens sheet 020, as shown schematically by way of the dashed arrows 042. For example, the light source 120 may be positioned at a backside of the lenticular lens sheet 020 and the camera 140 at a front side of the lenticular lens sheet 020. In this respect, it is noted that Figs. 2 and 3 represent a cross-section of the lenticular lens sheet in a direction perpendicular to a longitudinal direction of the elongated lenticular lenses. The dashed arrows in the respective Figs. indicated that light emitted onto different parts of the lenticular lens sheet may nevertheless be simultaneously captured by the camera.

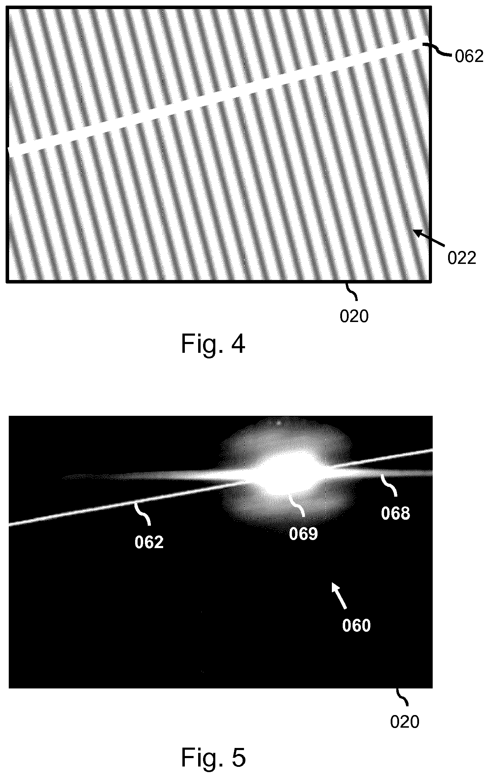

Fig. 4 illustrates a light pattern appearing in an image of the lenticular lens sheet 020. Here, the light pattern is shown to have the form of a line-shaped structure 062, which means the light pattern resembles or approximates a line. It has been found that such a line-shaped structure 062 is typical in the light pattern. Fig. 5 shows an actual photograph of a display comprising a lenticular lens sheet 020, with the photograph showing a light pattern. In this example, the display is an auto-stereoscopic display, and the light source is the flash light of a conventional, consumer grade digital still camera. In the photograph, two line-shaped structures can be seen: a horizontal line-shaped structure 068 and a slanted line-shaped structure 062. It has been found that the horizontal line-shaped structure 068 is related to the 2D display module and may be used to determine the rotational position of the display part behind the lenticular lens sheet 020, i.e., the so-termed 2D display module, whereas the direction of the slanted line-shaped structure 062 is related to the longitudinal lens direction of the lenticular lenses of the lenticular lens sheet 020 and thereby indicative of the rotational position of the lenticular lens sheet 020 in that there exists a predetermined relation between said angle and the rotational position of the lenticular lens sheet 020. The predetermined relation may be dependent on the type of lenticular lens sheet and the relative positions and orientations of the light source, the camera and the lenticular lens sheet, and may be predetermined by means of simulation or calibration. In the latter case, a conventional measurement method, e.g., involving the use of a calibration sample, an image sheet with a pattern or markers, etc., may be initially used to determine the predetermined relation for one lenticular lens sheet 020, after which the system and method as described may be employed to determine the rotational position of further lenticular lens sheets of the same type.

The angle of the line-shaped structure 062 in the image may be determined as follows. Here and in the following, the line-shaped structure is also referred to simply as 'reflection line'.
1) Acquire an image of the area in which the reflection line appears.
2) If in color, convert the color image to a black-and-white image
3) Define a region-of-interest in which to look for the reflection line.
4) Use filters to preprocess the image.
5) Detect the angle of the line with respect to the pixel rows of the image.

Here, step 1) may be performed by the camera whereas steps 2) to 5) may be performed by the processor. Several steps are optional, including the preprocessing of the image. These, however, may reduce image artefacts caused by the optics of the photo camera or image sensor. Such preprocessing may include noise reduction, contrast enhancement, reduction color aberrations, compensation for lens aberrations, etc. Since the aim is to measure the angle of a line-shaped structure, any filtering is preferably edge preserving. One particular useful filter is the bilateral filter, as described by Carlo Tomasi and Roberto Manduchi, "Bilateral filtering for gray and color images" in Computer Vision, 1998. Sixth International Conference on, IEEE, 1998, pp. 839- 846, which has edge-preserving properties.

In order to perform step 5), the following edge detection has been found to be beneficial:
1) In a first step, a coarse line angle is determined, e.g., using known techniques.
2) This line angle is used to define an inseparable 2D adaptive low-pass filter. The filter coefficients are determined by the coarse line angle, such that along the direction of the line, the filter behaves as a strong low-pass filter, whereas in a perpendicular direction, the filter is weak.
3) This directional-dependent 2D filter is applied on the image.
4) The line angle is determined again, now on the filtered image.

Many alternatives to the above manner of determining the angle of the line-shaped structure 062 exist, as are known per se from the technical field of image analysis. For example, an alternative may be to perform the following steps on each image column so as to determine the upper- and the lower edge of the reflection line, as this has been found to be precisely detectable.
1) Determine the 50% luminance point between minimum and maximum luminance values over the whole column.
2) On the left-hand part of the image: traverse from bottom to top over the column and find the black-white transition. Determine the position of the 50% luminance point in the black-white transition by means of interpolation so as to obtain a sub-pixel accurate position.
3) Continue to locate the white-black transition and also determine the position of the 50% luminance point in a similar manner as under 2).
4) On the right-hand part of the image: traverse from top to bottom and locate the two 50% luminance points in a similar manner as under 2) and 3).
5) Ignore the middle part of the image as this may comprise a direct reflection of the light source.

It is noted that the scanning, e.g., bottom to top in the left-hand part of the image and top to bottom in the right-hand part, may be adjusted to the expected direction of the elongated lenticular lenses. For example, the scanning may be reversed in case of a negative slope of the reflection line.

This may result in a large number of measurements for the position of the reflection line. By way of simple trigonometric calculations, these positions may be converted to angle measurements. Outliers in the angle measurements may be discarded, e.g., using known statistical techniques such as majority selection. The angle measurements may then be averaged. As the resulting angle is an average of a large number of angle measurements, it is typically precise. It will be appreciated that various alternatives to the above technique exist, such as least-squares fitting of a straight line.

With further reference to Fig. 4, it is noted that a direct reflection 069 of the light source may occur, e.g., of the camera's flash, which may be avoided by the light source being positioned behind the camera, or which may be detected and then disregarded in the image's analysis, etc.

In general, when illuminating the lenticular lens sheet or part thereof with a single light source, it may be desirable to direct the camera to the middle of the illuminated part and perpendicular to its surface. Preferably, the light source and the center of the camera are positioned such that they are approximately lying in a plane that is perpendicular to the longitudinal lens direction. In this case, the photographed reflection line may be relatively straight and perpendicular to the longitudinal lens direction. When the light source and camera are positioned differently, (slightly) curved reflection lines may occur and/or reflection lines that are not (exactly) perpendicular to the longitudinal lens direction. Although this does not yield fundamental problems, a decrease in accuracy and precision may be expected.

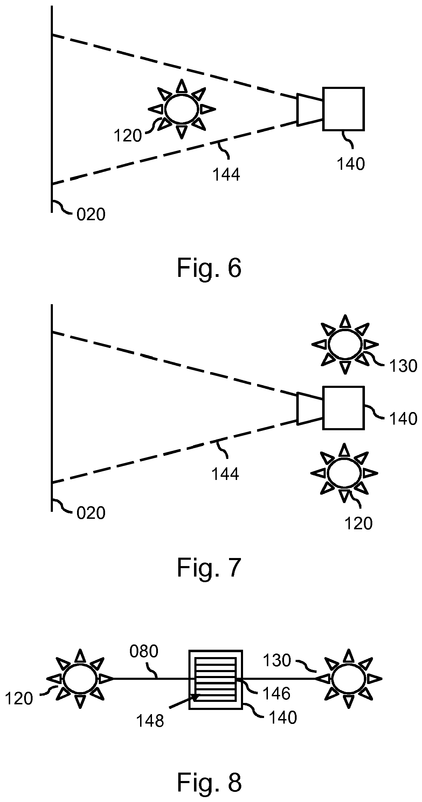

Fig. 6 shows the light source 120 being positioned in front of the camera 140, thereby partially but not completely blocking a field of view 144 of the camera. Also the light source and the camera are positioned on a virtual line perpendicular to the lenticular lens sheet and the optical axis of the camera coincides with this virtual line. This figure relates to the following: instead of positioning the light source 120 at a place where it is not blocking the light path into the camera 140, a sufficiently small light source may be positioned within the field of view 144 of the camera such that it only blocks a (small) part of the path of the reflected light. For example, a small point source, or approximation thereof, may be used. This may ensure that the reflection line is straight rather than curved, independent from the rotational position of the lenticular lens sheet. Namely, in this case the camera and the light source are lying in a virtual plane that is perpendicular to the lenticular direction, independent from the rotational position of the lenticular lens sheet. Rather, when curvature is observed, this may indicate, e.g., a lack of lenticular straightness.

In general, it is noted that curvature caused by lens aberrations may be minimized when a straight line is going through the center of the image. However, this does not necessarily mean the light source has to be positioned in front of the camera. In view of the above, the straightness of the line in the image may be increased by performing either or both of:
1. Placing the camera and light source in a virtual plane which is approximately perpendicular to the lens direction. It is noted that the location of the plane may be coarsely known from, e.g., calibration, previous measurements or simulation.
2. Taking care that the reflection line goes through the center of the image. For that purpose, the reflection line in the image should cross the optical axis of the camera.

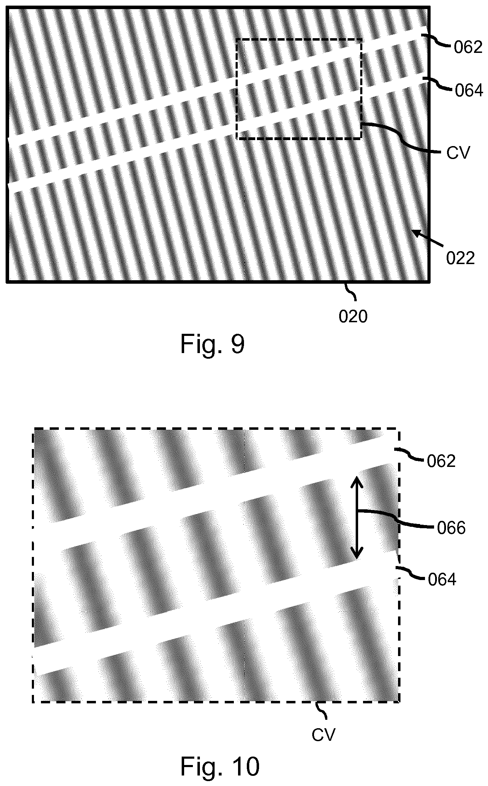

Figs. 7-10 relate to the following: in addition to a first light source 120, yielding a first line-shaped structure 062 in the image, a second light source 130 may be used which is arranged at the first one of the two sides of the lenticular lens sheet 020 for emitting light onto at least part of the surface of the lenticular lens sheet. The processor may be configured for analyzing the image to identify a second line-shaped structure 064 in the light pattern, and determining the rotational position of the lenticular lens sheet based on a comparison of properties of the first line-shaped structure 062 and the second line-shaped structure 064. Using two light sources 120, 130 may give more precise results. E.g., when both light sources 120, 130 and the camera 140 are positioned in a same virtual plane, both reflection lines 062, 064 may overlap each other when the plane is perpendicular to the longitudinal lens direction. When the reflection lines 062, 064 do not overlap, as indicated in Fig. 9 and by way of the cutout CV shown in Fig. 10, the distance 066 between them may be a measure for the rotational position of the lenticular lens sheet 020. The system and method may be calibrated such that the measured distance gives direct information about the rotational position of the lenticular lens sheet 020.

The distance 066 may be determined as follows:
1) Acquire an image of the area in which the reflection lines appear.
2) Define regions-of-interest in which to look for the reflection lines.
3) Use filters to preprocess the image.
4) Detect the distance between the lines.

As in the case of detecting the angle of the reflection line with respect to the pixel rows of the image, also here various possibilities exist to detect the distance between the reflection lines. For example, the distance may be detected by performing the following steps on each image column and for each reflection line so as to determine the upper- and the lower edge of the reflection lines. Here, as will be discussed further onwards, it is assumed that for each reflection line a separate intensity component is available by way of the light sources using different colors that are separable by the sensor. For example, the first reflection light may be represented by way of the red color component and the second reflection line may be represented by the green color component of the image. As such, the following may be performed for each reflection line using its respective intensity component.
1) Determine the 50% luminance point between minimum and maximum luminance values over the whole column.
2) On the left-hand part of the image: traverse from bottom to top over the column and find a rising slope representing a lower edge of the reflection line. Determine the position of the 50% luminance point in the slope by means of interpolation so as to obtain a sub-pixel accurate position
3) Continue to locate the downward slope representing an opposite edge of the reflection line and also determine the position of the 50% luminance point in a similar manner as under 2).
4) On the right-hand part of the image: traverse from top to bottom and locate the two 50% luminance points in a similar manner as under 2) and 3).
5) Calculate the average of all transition points in order to get one value representing the position of the reflection line.
6) Perform the above for both reflection lines and calculate the difference between the position values of both reflection lines.

Again, the scanning, e.g., from bottom to top in the left-hand part of the image and top to bottom in the right-hand part, may be adjusted to the expected direction of the elongated lenticular lenses. For example, the scanning may be reversed in case of a negative slope of the reflection line.

It has been found beneficial when the camera is rotated such that the pixel columns of the sensor of the camera are parallel to the longitudinal lens direction of the lenticular lenses. Namely, in this case, and when assuming that the reflection line(s) are perpendicular to the longitudinal lens direction, the reflection line(s) may coincide with the sensor rows, which may facilitate a more precise detection of the rotational position of the lens sheet . For that purpose, as also shown in Fig. 8, the two light sources 120, 130 and the camera 140 may be positioned in physical space in a virtual plane 080 (which is intersected in Fig. 8 and thus shown as a line), with the virtual plane 080 being oriented approximately perpendicular to the direction of the elongated lenticular lenses. Furthermore, when using two or more light sources, it has been found to be beneficial to select or configure the light sources to have different optical properties which are distinguishable in the image data obtained from the camera. For example, the light sources may emit light having a different color. Other distinguishable properties include use of light sources with different intensities, or different sizes such that the width of the reflection lines differ, etc. This may facilitate identifying and analyzing the individual reflection lines. When using different colors, the colors may be selected such that they are optimally separable by way of the different color filters, or other color separation means, of the camera's sensor. For example, in case of a red-green-blue (RGB) sensor, the first light source may be selected or configured to emit red light whereas the second light source may be selected or configured to emit blue light. An advantage of using different colors is that the positions of the reflection lines within the image may still be determined accurately when both reflection lines partially or even entirely overlap within the image.

It is noted that it may not be needed to identify which reflection line belongs to which light source so as to determine the rotational position of the lenticular lens sheet. For example, as an alternative, a feedback system may be used in which the lenticular lens sheet, or the combination of camera and light source(s), is rotated such that the distance between the reflection lines is minimized, i.e., becomes zero, thereby bringing the lenticular lens sheet in a known rotational position. Such rotation may take place as part of a closed-loop feedback system.

It is noted that, in general, multiple light sources and cameras may be used. Also, instead of using the complete reflection line in the subsequent analysis by the processor, also one or a few segments of the reflection line may be used. Moreover, the camera may be focused on the virtual image of the light source. Alternatively, the camera may be used out of focus, in which way imperfections will be smoothed. This may replace or supplement a digital filtering of the image.

The light source and/or camera may be positioned under different angles with respect to the normal on the surface of the lenticular lens sheet. Although this may have as effect that the reflection line is curved instead of straight and may not appear perpendicular to the lens direction, when this behavior is known, e.g., from a prior simulation or calibration, it may be compensated for by the processor and the rotational position of the lenticular lens sheet may nevertheless be precisely determined. The precision of the system and method may be further improved by using a point source, or an approximation thereof, as light source(s) as this may yield sharper edges of the reflection line(s). Moreover, when using two or more light sources, and when it is not possible to process the sensor data in such a way that the respective reflection lines can be separated from each other, the camera and the light sources may be deliberately positioned in a plane that is not perpendicular to the longitudinal lens direction, for any possible rotational position of the lenticular lens sheet. It is also noted that the reflection line will not in all cases be infinitely long, e.g., when the lenticular slope does not increase to 90°. The length of the reflection line thus gives information about the maximum slope of the lenticular lenses.

Moreover, if it is desired to capture the reflection line from anywhere on the lenticular lens sheet but the camera cannot be placed at such a far distance to the lenticular lens sheet such that the reflection line can be seen from one side of the lenticular lens sheet to the other side, then multiple cameras may be used, which may be aligned and calibrated with respect to each other. It is noted that any suitable type of camera may be used, such as a digital still camera, or in general any image capturing system which can provide an image of the light reflected by the surface of the lenticular lens sheet.

The camera lens may also be replaced by a collimator. Also, a pinhole camera may be used. It is further possible to use a single CCD sensor as camera, or possibly a line CCD that has only one pixel row, or an array of sensors with or without making use of an imaging lens, a collimator etc., and place it/them just in front of the lenticular lens sheet. Namely, light from a point source or a parallel light beam will be focused in a focus plane somewhere in front of the lenticular lens sheet. When putting the sensor(s) in this focus plane, the focused light dot-shaped structures or line-shaped structures will be recorded, from which the rotational position of the lenticular lens sheet, as well as the lens pitch of the lenticular lenses, may be calculated. The sensor(s) may also be moved towards and away from the lenticular lens sheet. This allows the position of the focus plane to be determined, from which the lenticular radius may be determined. Also, as camera, a line CCD or linear area of sensors may be used which is rotated precisely to obtain, from its recording, the rotational position of the lenticular lens sheet.

The system and method may, additionally or alternatively to being used for measuring a rotational position of a lenticular lens sheet, also be used for other types of measurement, e.g., as used in quality control of lenticular lens sheets. For example, it has been found that the reflection line actually consists of a series of dot-shaped structures, which can be observed best using a point light source and the camera being focused on the dot-shaped structures, or more exactly, the virtual point source. Each lenticular is forming one such dot-shaped structure. The lenticular pitch may then be measured from the distance between these dot-shaped structures. Furthermore, the distance of the focus plane to the lenticular lenses is thought to be related to the radius of the lenticular lenses. When focusing the camera, this focus distance may be determined. The distance to the lenticular lenses may be determined by bringing the lenticular lenses in focus, if needed with different illumination. By subtracting both distances, the radius of the lenticular lenses may be calculated when the light source distance is known. Moreover, when using two point light sources on both sides of and at approximately equal distances from the camera, the respective dot-shaped structures will show a displacement relative to each other. When averaging these positions, relatively precise lens pitch values may be obtained provided that the area of interest is in the region where a line, through the camera and perpendicular on the lenticular lens sheet, crosses the lenticular lens sheet. It has also been found that by moving the light source/camera over the lenticular lens sheet, or vice versa, information about non-uniformity may be obtained, such as lenticular pitch variations, lenticular rotation variations (e.g., in case the lenticular is not straight), lenticular shape variations etc. Lens pitch variations appear as a variation in distance between dot-shaped structures, whereas lenticular rotation variations appear as a change of the angle of the reflection line. The use of a long and thin line-shaped light source in the direction of the lenticular lenses will also reveal information about non-uniformity of the lenticular lenses in their length direction, such as lens pitch variations and lens rotation variations. By moving such a line-shaped light source in the direction perpendicular to the lenticular direction while keeping the camera at a fixed position, defect analysis may be performed. Moreover, a line source that is under an angle with the lenticular direction, e.g., 45 degrees, will reveal information about the shape of the lenticular lenses. Instead of a line-shaped light source, several point sources positioned along a straight line may be used. It is noted that when using a point source to obtain information about the lens pitch, the method might have to be calibrated for each lenticular shape, especially when information about the lens pitch of many lenticular lenses should be gathered in one shot. In this case, the separation between the dot-shaped structures may not be constant for constant lens pitch. This may be overcome by using a parallel light beam that illuminates the whole area of interest and is perpendicular to the lenticular lens sheet. When focusing a camera on the focus dot-shaped structures of the lenticular, the separation between the dot-shaped structures may be constant and thus independent from the lenticular shape. In this case, the dot-shaped structures will become short lines. As a parallel light beam, any technology may be used, varying from a laser to a point source with a lens to a directional backlight, etc. Instead of a parallel light beam that illuminates the whole area of interest at once, also a laser beam may be scanned over the area of interest. If done in a dark room, the shutter of the camera can stay opened during the scanning. Further, when using lenticular lenses with very small pitches, a diffraction pattern may be seen in the reflected light from illumination with a parallel light beam. The angles of the 1st, 2nd, etc., diffraction orders are directly related to the lenticular pitch, which may be determined in this way.

It is noted that the system and method may be used in the field of autostereoscopic displays where a lenticular lens sheet is used to enable the display to emit a viewing cone from each given point on the display, the viewing cone comprising at least a left view and a right view of a scene. This enables the viewer to see a different image with each eye when positioned accordingly within the viewing cone. Certain autostereoscopic displays, sometimes referred to as automultiscopic displays, provide multiple views of the same scene, rather than only a left and a right view. This allows the viewer to assume multiple positions in the viewing cone, i.e., move left-right in front of the display, while still obtaining a stereoscopic perception of the scene. Examples of such autostereoscopic displays are described in a paper by C. van Berkel et al entitled "Multiview 3D - LCD" published in SPIE Proceedings Vol. 2653, 1996, pages 32 to 39 and in GB-A-2196166.

In such an autostereoscopic display, a lens module may be used which may include, amongst others, a lenticular lens sheet, which should be placed under a defined angle with the pixel columns of a 2D open cell (referring to a panel with the driver IC and PCB, rather than the complete module with backlight and power components assembled which is otherwise also referred to as '2D display module'). In principle, the angle may be any angle but should be a defined angle. The lens module may be attached to the 2D open cell by means of a transparent glue. Before the glue is cured, the lens module should be aligned under the defined angle with respect to the 2D open cell. The required rotational alignment accuracy (i.e. the deviation from the intended rotational position) is generally in the order of 0.02 to 0.2 mrad, but may also be lower or higher depending on the application.

A procedure for the bonding of the lens module to the 2D display module as at least internally known to the inventors may be the following. 1. A 2D open cell is placed on a bonding unit. 2. Connections are made to be able to display pictures on the 2D open cell. 3. Glue is dispensed on the 2D open cell. 4. The lens module is placed on top of the glue. 5. An alignment picture is displayed on the 2D open cell. 6. The quality of the rotational alignment is judged using specific features of the observed picture (which is composed of the alignment picture modified by the lens module), 7. The lens module is rotated with respect to the 2D open cell, until the specific features of the observed picture are within specified boundaries. 8. The glue is cured, thereby obtaining a so-termed "3D open cell". 9. Connections to the 3D open cell are removed. 10. The 3D open cell is removed from the bonding unit.

An example of step 5 to 7 may be found in US 8421934 B2. Disadvantageously, the connectors on the 2D display module are fragile and when they are damaged the whole 2D open cell cannot be used anymore. Therefore the risk and consequences of yield loss are high. Disadvantageously, the connectors in the production equipment may be damaged, leading to production stand-still, or causing damage to all displays after a defect is introduced. The risk/disadvantage on the production equipment may be more severe than the damage to the products. The procedure also involves extra process steps, which lead to an increase of time and risk of errors, in particular with respect to steps 2 and 5. The alignment picture is dependent on both the 2D optical cell and lens module designs. Thus, for every combination of 2D open cell and lens module, a new alignment picture should be generated, which is tedious. To be able to display an alignment picture, extra hardware is needed, such as a PC with dedicated software, a backlight module, etc.

The system and method as described in the present specification provides a 'passive' alternative in that it does not need activation of the 2D display module, while still being able to achieve the desired rotational alignment accuracy. The system and method may be used in or for production equipment for (semi-)automated manufacturing of auto-stereoscopic displays that make use of lenticular lenses or lenticular-like lenses. The system and method may also be applied to other types of 3D displays with optical systems in which a lenticular lens structure plays a role.

In accordance with the system and method as described in the present specification, the general procedure for the bonding of the lens module to the 2D display module may now be as follows: 1) A 2D open cell is placed on a bonding unit. 2) Glue is dispensed on the 2D open cell. 3) The lens module is placed on top of the glue. 4) Determine the rotational position of the 2D display module. 5) Determine the rotational position of the lens module. 6) Calculate the angle difference between the 2D display module and the lens module. 7) The lens module is rotated with respect to the 2D open cell, until the angle difference is within specified boundaries. 8) The glue is cured, thereby obtaining a 3D open cell. 9) The 3D open cell is removed from the bonding unit. Other variants of this procedure are equally conceivable and within reach of the person skilled in the art of autostereoscopic displays or display production technology.

It is noted that when measuring the rotational position of the lens module with respect to a 2D display module, the angle of the reflection line may be compared to a reference. Options include, but are not limited to: a) Use the horizontal reflection/transmission line. b) Use of alignment markers that are present outside the active area of most 2D display modules. c) Use reflected and/or transmitted light from the sides of the active area of the 2D display module. d) Use edges or other mechanical features of the 2D display module. It is also possible to measure the rotational alignment of the 2D display module first, then place the lens module and then determine the rotational alignment of the lens module. Also other sequences are possible. It is further noted that instead of mechanically adjusting the rotational position of the lens module, also the rotational position of the 2D display module may be adjusted.

Moreover, in general, it is noted that when the lenticular lenses are not slanted with respect to the display but parallel to the pixel columns, applying a light source in combination with certain 2D display modules may yield two reflection lines which are both horizontal and thus overlap each other. Since the reflection line from the lens module is thinner but also more intense, it may be detected using appropriate image analysis, as are known per se from the field of image analysis. Alternatively, the position and angle of the camera and light source may be changed to separate both reflection lines.

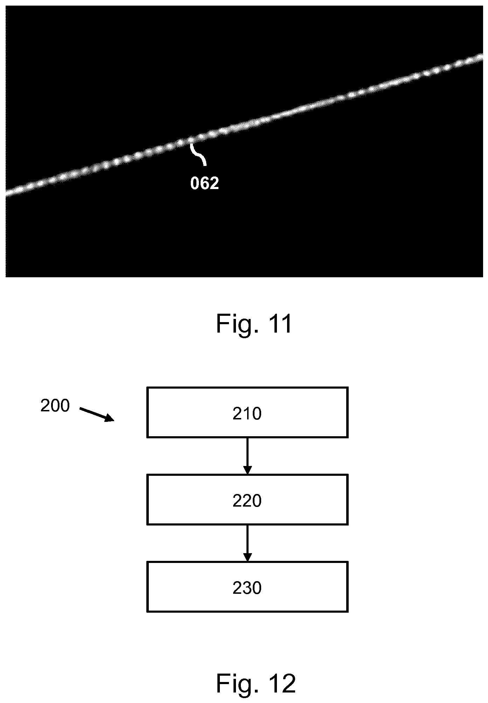

Fig. 11 shows a close-up photo of a light pattern as captured by the camera. It can be seen that the line-shaped structure 062 may actually be composed of individual dot-shaped structures, where each dot-shaped structure is related to the reflection from a particular lenticular lens and which together form the line-shaped structure 062. Depending on the type of lenticular lens sheet, the line-shaped structure 062 may also have a different composition.

Fig. 12 shows a method 200 for measuring a rotational position of a lenticular lens sheet, which may, but does not need to, correspond to an operation of the system 100 of Fig. 1. The method 200 comprises, in an operation titled "EMITTING LIGHT", emitting 210 light onto at least part of a surface of the lenticular lens sheet. The method 200 further comprises, in an operation titled "CAPTURING IMAGE", capturing 220 an image of the light reflected by, or transmitted through, the surface, thereby obtaining an image showing a light pattern. The method 200 further comprises, in an operation titled "ANALYSING IMAGE", determining 230 the rotational position of the lenticular lens sheet relative to a coordinate system associated with the image based on an analysis of the light pattern. It will be appreciated that the method may be implemented in the form of a computer program which comprises instructions for causing a processor system to perform the method. Performing the method may comprise controlling a light source to emit the light, controlling a camera to capture the image, etc. The method may also be implemented in dedicated hardware, or as a combination of the above.

The computer program may be stored in a non-transitory manner on a computer readable medium. Said non-transitory storing may comprise providing a series of machine readable physical marks and/or a series of elements having different electrical, e.g., magnetic, or optical properties or values. Examples of computer program products include memory devices, optical storage devices, integrated circuits, servers, online software, etc.

It is noted that the term 'processor' may refer to a single microprocessor, or to a processing subsystem comprised of one or more microprocessors which execute appropriate software. An embodiment is a workstation. The software may have been downloaded and/or stored in a corresponding memory, e.g., a volatile memory such as RAM or a non-volatile memory such as Flash. Alternatively, the implementation may be in the form of programmable logic, e.g., as a Field-Programmable Gate Array (FPGA). In general, the implementation may be in the form of a circuit.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for measuring a rotational position of a lenticular lens sheet (020) comprising an array of elongated lenticular lenses, the system comprising:
- a first light source (120) and a second light source (130), each of said light sources being arranged at a first one of the two sides of the lenticular lens sheet for emitting light onto at least part of a surface of the lenticular lens sheet;
- a camera (140) arranged at a second one of the two sides of the lenticular lens sheet, wherein the first one and the second one of the two sides are a same side to capture an image of the light reflected (040) by the surface or opposite sides to capture an image of the light transmitted (042) through the surface, whereby the captured image shows a light pattern (060); and
- a processor (160) configured for determining the rotational position of the lenticular lens sheet relative to a coordinate system associated with the image by:
- analyzing the image to identify a first line-shaped structure (062) and a second line-shaped structure (064) in the light pattern (060);
- determining the rotational position of the lenticular lens sheet (020) as a measure of a distance (066) between the first line-shaped structure and the second line-shaped structure in the image.

2. The system (100) according to claim 1, wherein the camera (140) is oriented with its optical axis perpendicular to the lenticular lens sheet (020).

3. The system (100) according to claim 1 or 2, wherein the first light source (120) and the second light source (130) emit light having different optical properties which are distinguishable in the image data obtained from the camera (140).

4. The system (100) according to claim 3, wherein the first light source (120) and the second light source (130) emit light having a different color.

5. The system (100) according to any one of claims 1 to 4, wherein the first light source (120) and the second light source (130) are positioned at opposite sides of the camera.

6. The system (100) according to any one of the above claims, wherein the processor (160) is configured for applying an artifact reduction filter to the image prior to analyzing the light pattern (060).

7. A method (200) for measuring a rotational position of a lenticular lens sheet comprising an array of elongated lenticular lenses, the method comprising:
- emitting (210), with a first light source and a second light source, light onto at least part of a surface of the lenticular lens sheet;
- capturing (220) an image of the light reflected by, or transmitted through, the surface, whereby the image captured shows a light pattern; and
- determining (230) the rotational position of the lenticular lens sheet relative to a coordinate system associated with the image by:
- analyzing the image to identify a first line-shaped structure and a second line-shaped structure in the light pattern;
- determining the rotational position of the lenticular lens sheet as a measure of a distance between the first line-shaped structure and the second line-shaped structure in the image.

8. The method (200) according to claim 7, wherein the method is used in the manufacture of a product or device comprising the lenticular lens sheet.

## Patentansprüche

1. System (100) zur Messung einer Rotationsposition einer Linsenrasterplatte (020), das ein Array länglicher linsenförmiger Linsen umfasst, wobei das System Folgendes umfasst:
- eine erste Lichtquelle (120) und eine zweite Lichtquelle (130), wobei jede der Lichtquellen auf einer ersten der zwei Seiten der Linsenrasterplatte angeordnet ist, um Licht mindestens auf einen Teil einer Oberfläche der Linsenrasterplatte zu emittieren;
- eine auf einer zweiten der zwei Seiten der Linsenrasterplatte angeordnete Kamera (140), wobei die erste und die zweite der zwei Seiten eine selbe Seite sind zur Aufnahme eines Bildes des durch die Oberfläche reflektierten (040) Lichts oder gegenüberliegende Seiten sind zur Aufnahme eines Bildes des durch die Oberfläche durchgelassenen (042) Lichts, wobei das aufgenommene Bild ein Lichtmuster (060) zeigt; und
- einen Prozessor (160), ausgelegt zum Bestimmen der Rotationsposition der Linsenrasterplatte relativ zu einem dem Bild zugeordneten Koordinatensystem durch:
- Analysieren des Bildes, um eine erste linienförmige Struktur (062) und eine zweite linienförmige Struktur (064) in dem Lichtmuster (060) zu identifizieren;
- Bestimmen der Rotationsposition der Linsenrasterplatte (020) als Maß eines Abstands (066) zwischen der ersten linienförmigen Struktur und der zweiten linienförmigen Struktur in dem Bild.

2. System (100) nach Anspruch 1, wobei die Kamera (140) mit ihrer optischen Achse senkrecht zu der Linsenrasterplatte (020) orientiert ist.

3. System (100) nach Anspruch 1 oder 2, wobei die erste Lichtquelle (120) und die zweite Lichtquelle (130) Licht emittieren, das verschiedene optische Eigenschaften aufweist, die in den von der Kamera (140) erhaltenen Bilddaten unterscheidbar sind.

4. System (100) nach Anspruch 3, wobei die erste Lichtquelle (120) und die zweite Lichtquelle (130) Licht emittieren, das verschiedene Farbe aufweist.

5. System (100) nach einem der Ansprüche 1 bis 4, wobei die erste Lichtquelle (120) und die zweite Lichtquelle (130) an entgegengesetzten Seiten der Kamera positioniert sind.

6. System (100) nach einem der obigen Ansprüche, wobei der Prozessor (160) ausgelegt ist zum Anwenden eines Artefaktreduktionsfilters auf das Bild vor dem Analysieren des Lichtmusters (060).

7. Verfahren (200) zur Messung einer Rotationsposition einer Linsenrasterplatte, das ein Array länglicher linsenförmiger Linsen umfasst, wobei das Verfahren Folgendes umfasst:
- Emittieren (210) von Licht auf mindestens einen Teil einer Oberfläche der Linsenrasterplatte mit einer ersten Lichtquelle und einer zweiten Lichtquelle;
- Aufnehmen (220) eines Bildes des Lichts, das durch die Oberfläche reflektiert oder durchgelassen wird, wobei das aufgenommene Bild ein Lichtmuster zeigt; und
- Bestimmen (230) der Rotationsposition der Linsenrasterplatte relativ zu einem dem Bild zugeordneten Koordinatensystem durch:
- Analysieren des Bildes, um eine erste linienförmige Struktur und eine zweite linienförmige Struktur in dem Lichtmuster zu identifizieren;
- Bestimmen der Rotationsposition der Linsenrasterplatte als Maß eines Abstands zwischen der ersten linienförmigen Struktur und der zweiten linienförmigen Struktur in dem Bild.

8. Verfahren (200) nach Anspruch 7, wobei das Verfahren bei der Herstellung eines Produkts oder einer Vorrichtung, das bzw. die die Linsenrasterplatte umfasst, verwendet wird.

## Revendications

1. Système (100) pour mesurer une position en rotation d'une feuille de lentilles lenticulaires (020) comprenant un réseau de lentilles lenticulaires allongées, lequel système comprend :
- une première source de lumière (120) et une seconde source de lumière (130), chacune desdites sources de lumière étant disposée au niveau d'un premier côté de deux côtés de la feuille de lentilles lenticulaires afin d'émettre de la lumière sur au moins une partie de la surface de la feuille de lentilles lenticulaires ;
- une caméra (140) disposée au niveau d'un second côté des deux côtés de la feuille de lentilles lenticulaires, dans lequel le premier et le second des deux côtés représentent un même côté pour capturer une image de la lumière réfléchie (040) par la surface ou des côtés opposés afin de capturer une image de la lumière transmise (042) à travers la surface, l'image capturée présentant un motif lumineux (060) ; et
- un processeur (160) conçu pour déterminer la position en rotation de la feuille de lentilles lenticulaires par rapport à un système de coordonnées associé à l'image en :
- analysant l'image afin d'identifier une première structure en forme de ligne (062) et une seconde structure en forme de ligne (064) dans le motif lumineux (060) ;
- déterminant la position en rotation de la feuille de lentilles lenticulaires (020) comme une mesure d'une distance (066) entre la première structure en forme de ligne et la seconde structure en forme de ligne dans l'image.

2. Système (100) selon la revendication 1, dans lequel la caméra (140) est orientée de sorte que son axe optique soit perpendiculaire à la feuille de lentilles lenticulaires (020).

3. Système (100) selon la revendication 1 ou 2, dans lequel la première source de lumière (120) et la seconde source de lumière (130) émettent une lumière ayant des propriétés optiques différentes qui sont distinguables dans les données d'image obtenues à partir de la caméra (140) .

4. Système (100) selon la revendication 3, dans lequel la première source de lumière (120) et la seconde source de lumière (130) émettent une lumière ayant une couleur différente.

5. Système (100) selon l'une quelconque des revendications 1 à 4, dans lequel la première source de lumière (120) et la seconde source de lumière (130) sont disposées sur des côtés opposés de la caméra.

6. Système (100) selon l'une quelconque des revendications précédentes, dans lequel le processeur (160) est conçu pour appliquer un filtre de réduction d'artéfact à l'image avant d'analyser le motif lumineux (060) .

7. Procédé (200) pour mesurer une position en rotation d'une feuille de lentilles lenticulaires comprenant un réseau de lentilles lenticulaires allongées, lequel procédé comprend :
- émettre (210), avec une première source de lumière et une seconde source de lumière, une lumière sur au moins une partie de la surface de la feuille de lentilles lenticulaires ;
- capturer (220) une image de la lumière réfléchie ou transmise par la surface, l'image capturée présentant un motif lumineux ; et
- déterminer (230) la position en rotation de la feuille de lentilles lenticulaires par rapport à un système de coordonnées associé à l'image en :
- analysant l'image afin d'identifier une première structure en forme de ligne et une seconde structure en forme de ligne dans le motif lumineux ;
- déterminant la position en rotation de la feuille de lentilles lenticulaires comme une mesure d'une distance entre la première structure en forme de ligne et la seconde structure en forme de ligne dans l'image.

8. Procédé (200) selon la revendication 7, lequel procédé est utilisé dans la fabrication d'un produit ou d'un dispositif comprenant la feuille de lentilles lenticulaires.
